# EUROPÄISCHE PATENTSCHRIFT

(11) **EP 0 628 614 B1**
(45) Veröffentlichungstag und Bekanntmachung des Hinweises auf die Patenterteilung: **11.08.1999**
(21) Anmeldenummer: 94108279.4
(22) Anmeldetag: 30.05.1994
(51) Int. Cl.: C09D 133/16, C09D 4/00, C08J 7/04

(54) **Kratzfestbeschichtungsmittel auf Acrylatbasis**
Acrylate based scratch-resistant coating
Matériau de revêtement résistant à l'abrasion à base d'acrylate

(30) Priorität: 09.06.1993 DE 4319198
(43) Veröffentlichungstag der Anmeldung: 14.12.1994
(73) Patentinhaber: Röhm GmbH, 64293 Darmstadt (DE)
(72) Erfinder: Brehm, Manfred, Dr., D-63743 Aschaffenburg (DE); Müller, Michael, Dr., D-64625 Bensheim (DE); Neeb, Rolf, D-64319 Pfungstadt (DE)

(56) Entgegenhaltungen:
- WO-A-92/21492
- GB-A- 1 262 526
- Database Chemical Abstracts (HOST: STN), access n 107: 135 968, Colombus, Ohio, VS; &JP-A-61 258 870(KANSAI PAINT CO.,LTD), 17 November 1986

## Beschreibung

### Gebiet der Erfindung

Die Erfindung betrifft Kratzfestlacke auf Basis mehrfunktioneller Acrylate und Methacrylate mit verbesserten Verlaufeigenschaften und ein Verfahren zum Überziehen von Formkörpern, insbesondere von Kunststoffen, wie organischen Gläsern, mit einer klaren Beschichtung in Form einer gehärteten dünnen Schicht, die durch Polymerisation von im Lack vorhandenen, wesentlich polyfunktionellen Acryl- und/oder Methacrylverbindungen entsteht, die sich durch hohe Kratzfestigkeit, auch unter extremen Witterungsbedingungen, auszeichnet.

### Stand der Technik

Nach der DE-A 21 64 716 und der DE-A 24 55 715 kann die Polymerisation mehrfunktioneller Acrylat-Systeme mit thermisch zerfallenden Polymerisationsinitiatoren, den üblichen öllöslichen Peroxiden und Azoverbindungen, oder durch Bestrahlung, z.B. durch Einwirkung von UV-Strahlung in Gegenwart von Photoinitiatoren, durchgeführt werden.

Bevorzugt wendet man die UV-Initiierung an, da diese auch in Anwesenheit von Luftsauerstoff durchführbar ist. Nach der DE-A 29 28 512 ergibt die Durchführung einer solchen UV-Polymerisation bei Temperaturen zwischen 70 Grad C und der Glastemperatur des zu beschichteten Kunststoffes kratzfeste Überzüge mit verbesserter Haftung.

Auch die peroxidische Initiierung zur Herstellung von beschichteten, kratzfesten Platten mit guter Witterungsbeständigkeit ist bekannt. Nach der EP-B 0 245 728 wird die Beschichtung mit aliphatischen Peroxydicarbonaten als peroxidischen Initiatoren durchgeführt.
UV-härtbare, kratzfeste Beschichtungen bildende Acrylharze mit Zusätzen von Fluroalkylgruppen-haltigen (Meth)acrylat-Comonomeren sind bekannt aus JP 63,196 667 (Ref.: CA 110,97285), enthaltend in einem Lösemittelgemisch neben polyfunktionellen Acrylaten 10 bis 60 % (Meth)acrylsäureester der Formel H₂C = C(R)CO₂CH₂R_{f} mit R = H, Me und R_{f} = C₁₋₂₀-Fluoralkyl, zur PC-Beschichtung, aus JP 60, 151 601 (Ref.: CA 104,69 939), beschreibend eine BuCOMe-Lösung mit polyfunktionellen Acrylaten und Dihydroperfluorhexylacrylat im Gew.-Verhältnis 55 : 45, für die Beschichtung von Plastik-Linsen aus Polydiallylverbindungen, und aus JP 77,105 936 (Ref.: CA 88,52 095) beschreibend ein Lackharz aus polyfunktionellen Acrylestern, Methylmethacrylat und, bezogen auf die Monomeren, 1 Gew.-% Hexafluorpropylmethacrylat, zur Beschichtung von Polymethacrylat-Linsen. Durch das Fluorcomonomere erhält die harte Beschichtung der Polymethacrylat-Linse bessere optische Eigenschaften und eine bessere Oberflächenglätte.
Beschichtungsmassen für PMMA-Platten aus Diacrylat, Epoxyacrylat und Fluoralkylgruppen-haltigen Methacrylaten, werden in JP 61,258 870 (Ref: CA 107,135 968) angegeben. Mit diesen Kompositionen lassen sich keine harten und kratzfesten Beschichtungen erzeugen.

Kunststoff-Formkörper, auch kratzfestbeschichtete, werden vor allem in Form von Platten im Maschinenschutz und im Bau-Außenbereich, wie z.B. bei Lärmschutzwänden oder als Verglasungen von Fassaden, von Bushaltestellen, von Werbeflächen, Litfaßsäulen, sogenannten "mobilier urbain" eingesetzt. Für diesen Einsatz werden vornehmlich glasklare Kunststoff-Formkörper verwendet, deren kratzfeste Beschichtung ebenfalls klar und lichtdurchlässig sein soll.
Die aus dem Stand der Technik bekannten Beschichtungsmittel mit polyfunktionellen Acrylaten zur Herstellung von Kratzfestbeschichtungen sind entweder solche, bei denen sich infolge Fehlens von Verlaufmitteln leichte Oberflächenstörungen wie unebene, rauhe oder strukturierte Lackschichten und damit optische Uneinheitlichkeiten in der Beschichtung ausbilden, oder sie enthalten Lösemittel, die zwar den Verlauf der Lackschicht bekanntermaßen verbessern, es jedoch bei der Härtung, wegen der Flüchtigkeit bzw. der Verdunstung der Lösemittel, zur Ausbildung oberflächiger Strukturen und optischen Unruhen kommen kann (Ullmanns Encyklopädie der technischen Chemie, 4. Auflage, Band 15, Seiten 595 und 676 - 677). Auch zur Umweltentlastung und aus Arbeitssicherheitsgründen ist ein lösemittelfreies Beschichtungsmittel mit polyfunktionellen Acrylaten geboten.

### Aufgabe und Lösung

Es bestand die Aufgabe, Lacke zur Herstellung kratzfester Beschichtungen von Formkörpern aus Kunststoff zu entwickeln, die bei der Lackauftragung einen guten Verlauf haben und die praktisch emissionsfrei gehärtet werden können.

Überraschenderweise wurde gefunden, daß Beschichtungslacke aus mehrfunktionellen Acrylat- bzw. Methacrylat-Monomeren bzw. Monomermischungen, denen Fluoralkylgruppen-haltige Comonomere zugesetzt sind, auf den zu beschichtenden Formkörpern gut verlaufen und durch deren Polymerisation in Gegenwart von Azoverbindungen oder Peroxiden als Initiatoren oder vor allem durch UV-Strahlung in Gegenwart von Photoinitiatoren angeregt, hochkratzfeste und sehr witterungsbeständige Beschichtungen mit wesentlich verbesserter optischer Qualität erhalten werden.

Die im erfindungsgemäßen Beschichtungsmittel enthaltenen Fluoralkylgruppen-haltigen (Meth)acrylmonomeren der Formel 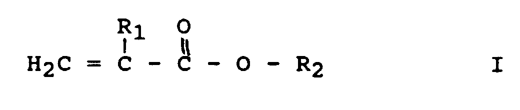 mit R₁ = H, CH₃ und R₂ = CₐH_{b}F_{c}
mit a = 2 bis 20, b = 0 bis 4, c = 2a + 1-b;
fungieren in Mengen von 2 bis 40 Gew.-%, bevorzugt von 5 bis 30 Gew.-%, insbesondere in Mengen von 5 bis 20 Gew.-% bezogen auf das Gesamtgewicht der im Beschichtungsmittel enthaltenen polymerisierbaren Komponenten, in diesem bei der Auftragung des Beschichtungslacks als hervorragende Verlaufmittel. Nach der Härtung des erfindungsgemäßen Beschichtungsmittels durch Polymerisation sind die als Verlaufmittel wirkenden Substanzen, im Gegensatz zu üblich verwendeten nicht polymerisierbaren Verlaufmittel, fest eingebunden und nicht migrationsfähig.

Die Erfindung betrifft Beschichtungsmittel zur Herstellung einer kratzfesten und witterungsbeständigen Beschichtung mit guter optischer Qualität auf einem Formkörper aus Kunststoff durch Aufbringen eines Lacküberzugs mit radikalisch polymerisierbaren, vernetzenden Monomeren und/oder Oligomeren mit wenigstens zwei polymerisierbaren Kohlenstoff-Doppelbindungen im Gemisch mit weiteren eine polymerisierbare Doppelbindung enthaltenden Monomeren und üblichen Additiven und Härten des Überzugs durch Polymerisation,
dadurch gekennzeichnet,
daß das Beschichtungsmittel als Verlaufmittel Fluoralkylgruppen-haltige (Meth)acrylmonomere der Formel 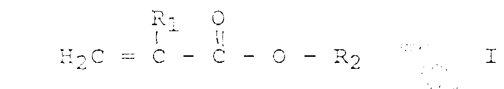 mit R₁ = H, CH₃; R₂ = CₐH_{b}F_{c}, mit a = 2 bis 20,
b = 0 bis 4, c = 2a + 1-b;
in Mengen von 2 bis 40 Gew.-% bezogen auf das Gesamtgewicht der im Beschichtungsmittel vorhandenen polymerisierbaren Komponenten und wenigstens 30 Gew.-% bezogen auf die zu polymerisierenden Monomeren bzw. Oligomeren eines Monomeren bzw. Oligomeren mit mindestens drei Kohlenstoff-Doppelbindungen enthält.

Die neuen Beschichtungsmittel geben den daraus hergesteelten Beschichtungen neben ihren bekannten Kratzfestigkeiten und infolge des guten Verlaufs, eine hohe optische Qualität als zusätliche Eigenschaft. Bewitterungsversuche im Xenotest zeigen, daß die mit den erfindungsgemäßen Beschichtungsmittelns auf z.B. extrudiertem Acrylglas erhaltenen Kratzfestbeschichtungen gute Bewitterungsergebnisse erbringen.

Die Witterungsbeständigkeit der mit dem erfindungsgemäßen, Fluoralkyl(meth)acrylate und polyfunktionelle (Meth)acrylate enthaltenden Beschichtungsmittel kratzfest beschichteten Kunststoff-Formkörper kann durch Mitverwendung von UV-Schutzmitteln und Alterungsschutzmitteln, insbesondere von einpolymerisierten UV-Schutzmitteln im Beschichtungsmittel noch wesentlich verbessert werden.
Die erfindungsgemäßen Beschichtungsmittel und die daraus hergestellten Beschichtungen bzw. Überzüge sind wesentlich aus wenigstens 30 Gew.-% einer polyfunktionellen (Meth)acrylverbindung, aus weniger als 30 Gew.-% einer weiteren einpolymerisierbaren Verbindung und 2 bis 40 Gew.-% eines Fluoralkylgruppen-haltigen (Meth)acrylmonomeren der Formel I aufgebaut.

### Vorteile der Erfindung

Vergleiche der Kratzfestigkeit der erfindungsgemäßen, jetzt bessere optische Eigenschaften aufweisenden Polyacrylatüberzüge mit bekannten kratzfesten Überzügen auf dieser bzw. Polysiloxanbasis auf Kunststoff-Flächen zeigen, daß die neuen Überzüge gute Kratzfestigkeiten aufweisen. Die Herstellung der Polyacrylat-Beschichtung ist wesentlich rationeller, da diese innerhalb von Sekunden durchhärtet, während die Polysiloxan-Beschichtung bei vergleichbaren Härtungstemperaturen mehrere Stunden Härtungszeit beansprucht.

### Durchführung der Erfindung

Eine kratzfeste Beschichtung ist auf solchen Kunststoff-Formkörpern zweckmäßig, die eine harte, glänzende Oberfläche haben, aber kratzempfindlich sind. Zu den Kunststoffen, die eine geringe Oberflächenhärte aufweisen, gehören solche, die wenig oder schwach vernetzt sind und sich im thermoplastischen oder thermoelastischen Zustand zu Formkörpern verarbeiten lassen. Hierzu gehören beispielsweise Polymethylmethacrylat, Mischpolymerisate aus Methylmethacrylat mit weiteren Methacryl- und/oder Acrylverbindungen, wie z.B. Acrylnitril, beispielsweise mit 60 Gew.-% Methylmethacrylat, Polystyrol, schlagzähe Styrol-Mischpolymerisate, Polyethylen, Polypropylen, Polyvinylchlorid, Cellulose oder Polycarbonate auf Bisphenol-A-Basis.

Die Beschichtung der Kunststoffe mit dem erfindungsgemäßen Beschichtungsmittel wird an dem Formkörper in seiner endgültigen Gestalt, beispielsweise an einem fertigen Spritzgußteil, vorgenommen, da die hochvernetzte kratzfeste Schicht nicht thermoplastisch oder thermoelastisch verformbar ist. In begrenztem Umfang läßt die Beschichtung eine elastische Biegung des Kunststoff-Formkörpers zu. Ein bevorzugter Gegenstand der Erfindung ist die Beschichtung von ebenen Platten oder kontinuierlich erzeugten ebenen Bändern, Hochprofilplatten oder Folien, wobei die Beschichtung direkt an den Extrusionsvorgang, bevorzugt in kontinuierlicher Vorgehensweise, angeschlossen werden kann.

Aber auch die Beschichtung von in großen Serien hergestellten Spritzgußteilen ist bevorzugt.

Beschichtungsmittel, die erfindungsgemäß einen guten Verlauf bringen, zu hochvernetzten, kratzfesten, witterungsbeständigen und optisch einwandfreien Beschichtungen aushärten, enthalten als wesentliche Bestandteile bis 40 Gew.-% eines oder mehrerer Fluoralkylgruppen-haltigen (Meth)acrylmonomeren der Formel I und ein oder mehrere radikalisch polymerisierbare Acryl- und/oder Methacrylverbindungen mit wenigstens zwei, vorzugsweise drei oder mehr polymerisierbaren Kohlenstoffdoppelbindungen. Die bevorzugten drei- oder höherfunktionellen Monomeren sind Acrylester von drei- oder höherwertigen Alkoholen, wie Glycerin, Trimethylolpropan, 1,2,4-Butantriol, 1,2,6-Hexantriol, Pentaerythrit, Diglycerin oder Dipentaerythrit. Bevorzugte polyfunktionelle Monomere sind Trimethylolpropantriacrylat bzw. Pentaerythrit-triacrylat und/oder -tetraacrylat, 1,2,6-Hexantrioltriacrylat. Der Anteil der Methacrylgruppen am Acryl- plus Methacrylmonomeren-Anteil soll möglichst niedrig gehalten werden. Bevorzugt ist ein Anteil von höchstens 30 Gew.-% Methacrylmonomere. Als polymerisierbare (Meth)acrylverbindungen können im Beschichtungsmittel auch reaktive, vorteilhaft polyfunktionelle Oligomere, wie beispielsweise Urethandi- bzw. -triacrylate oder entsprechende Esteracrylate mitverwendet werden.

Neben den als wesentlich angegebenen Monomeren, bringt die Mitverwendung von Monomeren, die eine oder zwei radikalisch polymerisierbare Doppelbindungen enthalten, Vorteile bei der Handhabung der im allgemeinen hochviskosen drei- und mehrfunktionellen Monomeren bzw. Oligomeren und in den Eigenschaften der Beschichtung, z.B. einer verbesserten Flexibilität. Beispiele für brauchbare Monomere mit einer polymerisierbaren Doppelbindung sind Styrol, Acrylnitril, Acrylate bzw. Methacrylate mit 1 bis 10 C-Atomen im Esterrest und die im Esterrest noch, z.B. mit OH-Gruppen, substituiert sein können. Besonders bevorzugt sind jedoch Monomere mit einem Siedepunkt > 140 Grad C und einer Acrylgruppe als polymerisierbare Einheit.

Beispiele für geeignete difunktionelle Comonomere sind 1,4-Divinylbenzol oder die Diacrylate und Dimethacrylate von Ethylenglykol, Diethylenglykol, Tetraethylenglykol, Propylenglykol-1,2, Butandiol-1,4 oder -1,3, Dimethylpropandiol, Hexandiol-1,6, Neopentylglykol, 2-Ethyl-hexandiol-2,3, wobei wiederum der Anteil an Methacrylaten niedrig zu halten ist.

Beispiele für die erfindungsgemäß zu verwendenden Fluoralkylgruppen-haltigen Acryl- und Methacrylmonomere der Formel I, die zum guten Verlauf des Beschichtungsmittels beim Auftragen sorgen, sind:
2,2,2-Trifluorethylmethacrylat, 2,2,3,3-Tetrafluorpropylacrylat, 2,2,3,3-Tetrafluorpropylmethacrylat, 2,2,3,4,4,4-Hexafluorbutylacrylat, 2,2,3,4,4,4-Hexafluorbutylmethacrylat, Nonadecafluorisodecylmethacrylat, 2,2,3,3,4,4,4-Heptafluorbutylacrylat, 2,2,3,3,4,4,5,5,6,6,7,7,7-Tridecafluorheptylacrylat, 2,2,3,3,4,4,5,5,6,6,7,7,8,8,9,9,9-Heptadecafluornonylacrylat, 2,2,3,3,4,4,5,5,6,6,7,7,8,8,9,9,10,10,11,11,11-Eicosafluorundecylacrylat, 3,3,4,4,5,5,6,6,7,7,8,8,9,9,10, 10,11,11,12,12,12-Heneicosafluordodecylacrylat 4,4,5,5,6,6,7,7,8,8,9,9,10,10,11,11,12,12,13,13,14,15,15, 15-Tetracosafluor-2-hydroxy-14(trifluormethyl)pentadecylacrylat, 3,3,4,4,5,5,6,6,7,7,8,8,9,9,10,10,11,11,12,12,13, 13,14,14,15,15,16,16,17,17,18,18,19,19,20,20,20-Heptatriacontafluoreicosylacrylat. Die beschriebenen Fluoralkylgruppen-haltigen Monomere sind bekannte Verbindungen.

Beispiele für Fluorarylgruppen-haltige (Meth)acrylmonomere, die in dem erfindungsgemäßen Beschichtungsmittel, vor allem in Kombination mit Fluorverbindungen der Formel I, gegebenenfalls mitverwendet werden können, sind 2,3,5,6-Tetrafluorphenylacrylat und 2,3,5,6-Tetrafluorphenylmethacrylat.

Die fluorhaltigen Acryl- und/oder Methacrylmonomeren, die den Beschichtungsmitteln mit mehrfunktionellen (Meth)acrylaten erfindungsgemäß gute Verlaufeigenschaften und den daraus hergestellten kratzfesten Beschichtungen auf Poly(meth)acrylat-Basis erfindungsgemäß gute optische Eigenschaften geben, sind in Mengen von 2 bis 40 Gew.-%, vorteilhaft in Mengen von 5 bis 20 Gew.-%, insbesondere in Mengen von 5 bis 10 Gew.-%, bezogen auf alle polymerisierbaren Verbindungen, im Beschichtungsmittel enthalten.

Eine verbesserte Witterungsbeständigkeit der erfindungsgemäßen Beschichtung wird durch eingearbeitete UV-Schutzmittel, wie sie als Zusätze zu Kunststoffen bekannt sind und in Ullmanns Encyklopädie der technischen Chemie, 4. Auflage, Band 15, Seiten 253 bis 260, aufgeführt sind und/oder vorteilhafterweise durch polymerisierbare UV-Stabilisatoren erreicht. Als Beispiel für polymerisierbare UV-Stabilisatoren sei 3-(2-Benzotriazolyl)-2-hydroxy-5-tert.-octylbenzylmethacrylamid genannt.

Die Mischungsverhältnisse der verschiedenen Monomerarten beeinflußt einerseits die Viskosität der Beschichtungsmischung, andererseits die Eigenschaften der ausgehärteten Schicht. Die drei- und mehrfunktionellen Monomeren bringen die höchste Kratzfestigkeit, aber auch eine starke Sprödigkeit hervor. Vorzugsweise beträgt ihr Anteil 30 Gew.-% oder mehr. Der Anteil bifunktioneller Monomerer, die ebenfalls zur Verbesserung der Kratzfestigkeit der damit beschichteten Kunststoffe beitragen mit dem Anteil der monofunktionellen, auch der fluorhaltigen Comonomeren, wird zusammen im allgemeinen nicht über 70 Gew.-% liegen. UV-Schutzmittel werden in Mengen von 1 bis 10 Gew.-%, bezogen auf die Mengen der die Beschichtung bildenden Monomeren eingesetzt.

Die Härtung des Beschichtungsmittels kann mit thermisch zerfallenden Initiatoren wie Peroxiden oder Azoverbindungen durchgeführt werden. Vorteilhaft wird sie jedoch mit UV-Licht in Gegenwart bekannter Photoinitiatoren ausgeführt. Die Härtungstemperaturen liegen etwa im Temperaturbereich von 0 bis 50 Grad C, insbesondere um 20 Grad C (Raumtemperaturhärtung). Weitere Zusätze können Antioxidantien oder Polymere, wie z.B. Polyesterharze, sein.

Das Beschichtungsmittel kann mittels verschiedener Techniken, wie Tauchen, Walzen, Gießen oder Sprühen, diskontinuierlich oder kontinuierlich auf die Kunststoff-Formköper, in Schichtdicken von 1 bis 100, vorzugsweise von 2 bis 50 µm, aufgebracht werden. Beispielsweise bietet sich nach der kontinuierlichen Herstellung von Kunststoffplatten durch Extrusion die Durchführung einer kontinuierlichen Beschichtung dieser, sich gegebenenfalls noch auf höheren Temperaturen befindlichen Platten, wobei diese Temperaturen aber unterhalb der Glastemperatur der Kunststoffplatten liegen, an. Die Aushärtung der Beschichtungsmittel wird normalerweise bei Temperaturen, die unterhalb der Glastemperatur des zu beschichtenden Kunststoffes liegt, durchgeführt. Zum Ausschluß des polymerisationsinhibierenden Sauerstoffs kann die Polymerisation unter Inertgas, z.B. Stickstoff, durchgeführt werden. Die Aushärtungszeit liegt im Sekunden- bis Minutenbereich, z.B. bei 5 bis 1 000 Sekunden, und hängt wesentlich von der Temperatur im Beschichtungsmittel ab.

### BEISPIELE

### Beispiel 1

Eine Mischung aus (59 - 0,6 x) Teilen 1,6-Hexandioldiacrylat, (39 - 0,4 x) Teilen Pentaerythrittetraacrylat, x Teilen verlaufsförderndes fluoriertes Monomer und 2 Teilen Darocur ® 1116 wird mit einem Spiralrakel (12 µm Naßfilmdicke) auf Platten aus Makrolon ® 281 aufgetragen und nach jeweils 2 Minuten Verlaufszeit mit einem Quecksilber-Hochdruckstrahler F450 der Fa. Fusion unter Stickstoffatmosphäre ausgehärtet. Anschließend wird das Verlaufen der auftragsbedingten Oberflächenstörungen des Lackbildes in Auf- bzw. Durchsicht begutachtet.

| *Lack* | *Monomer* | *X (%)* | *Taber-Wert* 1)(% haze) | *Verlauf* | *Bemerkungen* |
|---|---|---|---|---|---|
| *A* | *---* | *--* | *1,6* | *---* | *starke Ziehstreifen* |
| *B* | *2,2,3,3-Tetrafluorpropylmethacrylat* | *10* | 1,4 | *+* | *glatte Oberfläche* |
| *C* | *2,2,3,3-Tetrafluorpropylmethacrylat* | *20* | 1,7 | *++* | *sehr glatte Oberfl.* |
| *D* | *2,2,2-Trifluorethylmethacrylat* | *15* | 1,6 | *++* | *sehr glatte Oberfl.* |
| *E* | *1,1,1,3,3,3-Hexafluorisopropylmethacrylat* | *10* | *1,5* | *+* | *glatte Oberfl.* |

| | | | | | |
|---|---|---|---|---|---|
| 1) gemessen nach DIN 52347, 100 Umdrehungen CS10F, 5,4 N/Rad | | | | | |

### Beispiel 2

Die Lacke A und C aus Beispiel 1 werden im Revers-Walzen-Auftragsverfahren bei optimierten Maschinenparametern auf Platten aus Makrolon® 281 aufgetragen. Nach 2 min. Verlaufzeit wird unter Stickstoffatmosphäre ausgehärtet und die optische Qualität der Schicht begutachtet.

| | Lack A | Lack C |
|---|---|---|
| Verlauf | Dellen, Orangenhaut | sehr glatte Oberfläche |
| Substratbenetzung | Benetzungsfehler | gute Benetzung |
| Durchlichtbetrachtung | Rillen in Auftragsrichtung optisch unruhig | keine Rille sehr gleichmäßig, optisch ruhig |

## Patentansprüche

1. Beschichtungsmittel zur Herstellung einer kratzfesten und witterungsbeständigen Beschichtung mit guter optischer Qualität auf einem Formkörper aus kunststoff durch Aufbringen eines Lacküberzugs mit radikalisch polymerisierbaren vernetzenden Monomeren und/oder Oligomeren mit wenigstens zwei polymerisierbaren Kohlenstoff-Doppelbindungen im Gemisch mit weiteren eine polymerisierbare Doppelbindung enthaltenden Monomeren und üblichen Additiven und Härten des Überzugs durch Polymerisation,
dadurch gekennzeichnet,
daß das Beschichtungsmittel als Verlaufmittel Fluoralkylgruppen-haltige (Meth)acrylmonomere der Formel 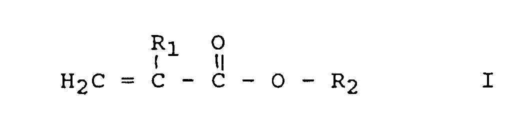 mit R₁ = H, CH₃; R₂ = CₐH_{b}F_{c}, mit a = 2 bis 20,
b = 0 bis 4, c = 2a + 1-b;
in Mengen von 2 bis 40 Gew.-% bezogen auf das Gesamtgewicht der im Beschichtungsmittel vorhandenen polymerisierbaren Komponenten und wenigstens 30 Gew.-% bezogen auf die zu polymerisierenden Monomeren bzw. Oligomeren eines Monomeren bzw. Oligomeren mit mindestens drei Kohlenstoff-Doppelbindungen enthält.

2. Beschichtungsmittel nach Anspruch 1, dadurch gekennzeichnet, daß dieses bezogen auf die zu polymerisierenden Monomeren und/oder Oligomeren wenigstens 30 Gew.-% eines Monomeren bzw. Oligomeren mit mindestens drei Kohlenstoff-Doppelbindungen und 5 bis 20 Gew.-% eines Fluroalkylgruppen-haltigen (Meth)acrylmonomeren der Formel I enthält.

3. Beschichtungsmittel nach den Ansprüchen 1 und 2, dadurch gekennzeichnet, daß als Monomere mit wenigstens zwei Kohlenstoff-Doppelbindungen zu wenigstens 70 Gew.-% Monomere mit Acrylat-Einheiten eingesetzt werden.

4. Beschichtungsmittel nach den Ansprüchen 1 bis 3, dadurch gekennzeichnet, daß es UV-Schutzmittel, insbesondere einpolymerisierbare UV-Schutzmittel enthält.

5. Verfahren zur Beschichtung von Formkörpern mit Beschichtungsmitteln nach einem der Ansprüche 1, bis 4, dadurch gekennzeichnet, daß die Formkörper Kunststoffe sind.

6. Verfahren nach Anspruch 5, dadurch gekennzeichnet, daß der Formkörper aus Polymethylmethacrylat oder einem zu wenigstens 60 Gew.-% aus Methylmethacrylat aufgebauten Mischpolymerisat oder aus einem Polycarbonat besteht.

7. Verfahren nach den Ansprüchen 5 und 6, dadurch gekennzeichnet, daß ein durch Extrusion erzeugter Formkörper beschichtet wird.

8. Verfahren nach den Ansprüchen 5 und 6, dadurch gekennzeichnet, daß Spritzgußteile beschichtet werden.

9. Formkörper aus thermoplastischem oder thermoelastischem Kunststoff mit einer kratzfesten und witterungsbeständigen Beschichtung, hergestellt mit einem Beschichtungsmittel gemäß den Ansprüchen 1 bis 4 und gemäß den Ansprüchen 5 bis 8.

## Claims

1. A coating agent for provision of a scratch-resistant and weatherproof coating, with good optical qualities, on a moulded plastic body by means of application of a varnish coating with radically-polymerisable crosslinking monomers and/or oligomers with at least two polymerisable carbon double bonds mixed with further monomers which contain a polymerisable double bond and the usual additives, and hardening of the varnish by means of polymerisation, characterised in that the coating agent, as an eluent, contains fluoralkyl group-containing (meth)acryl monomers of formula 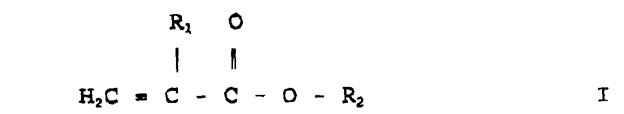 where R₁ = H, CH₃; R₂ = CₐH_{b}F_{c}, where a = 2 to 20, b = 0 to 4, c = 2a + 1-b;
in quantities of 2 to 40% by weight, based on the total weight of the polymerisable components present in the coating agent, and at least 30% by weight based on the monomers which are to be polymerised, or oligomers of a monomer, or oligomers with at least three carbon double bonds.

2. A coating agent according to claim 1, characterised in that based on the monomers and/or oligomers which are to be polymerised, this contains at least 30% by weight of a monomer or oligomer with at least three carbon double bonds and 5 to 20% by weight of a fluoroalkyl group-containing (meth)acryl monomer of formula I.

3. A coating agent according to claims 1 and 2, characterised in that at least 70% by weight of monomers with acrylate units are used as monomers with at least two carbon double bonds.

4. A coating agent according to claims 1 to 3, characterised in that it contains UV protection agents, especially those which can be polymerised therein.

5. A process for coating moulded bodies with coating agents according to one of claims 1 to 4, characterised in that the moulded bodies are plastics.

6. A process according to claim 5, characterised in that the moulded body comprises polymethylmethacrylate or a mixture of polymers comprised of at least 60% by weight methylmethacrylate or a polycarbonate.

7. A process according to claims 5 and 6, characterised in that a moulded body formed by extrusion is coated.

8. A process according to claims 5 and 6, characterised in that injection-moulded parts are coated.

9. Moulded bodies of thermoplastic or thermoelastic plastic with a scratch-resistant and weatherproof coating, produced by means of a coating agent according to claims 1 to 4 and according to claims 5 to 8.

## Revendications

1. Agents d'enduction pour la fabrication d'un revêtement résistant à l'abrasion et aux agents atmosphériques, ayant une bonne qualité optique, sur un article moulé en matière synthétique, par dépôt d'un revêtement de vernis avec des monomères et/ou oligomères réticulents polymérisables par voie radicalaire, avec au moins deux doubles liaisons carbone-carbone polymérisables dans le mélange, avec d'autres monomères contenant une double liaison polymérisable et des additifs habituels, et un durcissement du revêtement par polymérisation,
caractérisé en ce que
l'agent d'enduction contient comme agent d'écoulement des monomères (méth)acryliques contenant des groupes fluoroalkyle répondant à la formule 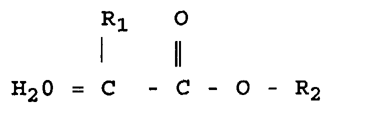 dans laquelle R₁ = H, CH₃ ; R₂ = CₐH_{b}F_{C}, avec a = 2 à 20, b = 0 à 4, c = 2a + 1-b ;
à des quantités de 2 à 40 % en poids, par rapport au poids total des composants polymérisables contenus dans l'agent de revêtement, et au moins 30 % en poids par rapport aux monomères ou selon les cas oligomères à polymériser, dans le monomère ou selon les cas oligomère ayant au moins trois doubles liaisons carbone-carbone.

2. Agent d'enduction selon la revendication 1,
caractérisé en ce qu'
il contient, par rapport aux monomères et/ou oligomères à polymériser, au moins 30 % en poids d'un monomère ou selon les cas d'un oligomère avec au moins trois doubles liaisons carbone-carbone et de 5 à 20 % en poids d'un monomère (méth)acrylique contenant des groupes fluoroalkyle de formule I.

3. Agent d'enduction selon les revendications 1 et 2,
caractérisé en ce qu'
on utilise comme monomères avec au moins deux doubles liaisons carbone-carbone à au moins 70 % en poids des monomères avec des unités acrylate.

4. Agent d'enduction selon les revendications 1 à 3,
caractérisé en ce qu'
il contient des agents de protection contre les U.V., en particulier des agents de protection contre les U.V. intégrables dans la polymérisation.

5. Procédé d'enduction d'articles moulés avec des agents de revêtement selon l'une des revendications 1 à 4,
caractérisé en ce que
les articles moulés sont en matière plastique.

6. Procédé selon la revendication 5,
caractérisé en ce que
l'article moulé se compose de polyméthacrylate de méthyle ou d'un polymère mixte constitué à au moins 60 % en poids de méthacrylate de méthyle, ou d'un polycarbonate.

7. Procédé selon les revendications 5 et 6,
caractérisé en ce qu'
on procède à l'enduction d'articles moulés produits par extrusion.

8. Procédé selon les revendications 5 et 6,
caractérisé en ce qu'
on enduit des pièces moulées par injection.

9. Article moulé en matière plastique thermoplastique ou thermoélastique avec une enduction résistant à l'abrasion et aux agents atmosphériques, produit avec un agent d'enduction selon les revendications 1 à 4 et selon les revendications 5 à 8.
